# FASCICULE DE BREVET EUROPEEN

(11) **EP 1 674 431 B1**
(45) Date de publication et mention de la délivrance du brevet: **20.09.2017**
(21) Numéro de dépôt: 04360113.7
(22) Date de dépôt: 24.12.2004
(51) Int. Cl.: C03C 17/36, A44C 27/00

(54) **Volume de cristal présentant un effet visuel décoratif de nature dichroïque**
Kristallglas mit dichroitischem und dekorativem Effekt
Crystal having a dichroic and decorative optical effect

(43) Date de publication de la demande: 28.06.2006
(73) Titulaire: Baccarat, 54120 Baccarat (FR)
(72) Inventeur: Gaillard Allemand, Bruno, 54122 Glonville (FR)
(74) Mandataire: Littolff, Denis

(56) Documents cités:
- US-A1- 2004 053 068
- US-A1- 2004 083 759
- US-B1- 6 292 302

## Description

La présente invention a trait à un bijou de type bague, boucle d'oreille, pendentif, broche, comportant un volume de matériau amorphe transparent du type cristal ou verre dont une partie de la surface externe est revêtue de couches successives métalliques ou céramiques destinées à lui conférer un effet visuel décoratif. Dans la suite, pour la clarté du propos, on se référera uniquement au cristal, qui n'est cependant qu'un exemple d'application possible.

L'effet visuel recherché résulte en fait d'un phénomène de dichroïsme obtenu par la combinaison du cristal et de la superposition des couches, entraînant des changements dans la coloration de la partie revêtue des couches notamment selon l'angle d'incidence de l'observation à travers le cristal. La combinaison d'un volume de cristal avec des revêtements métalliques a en fait déjà été utilisée dans le passé, l'association d'une première couche de chrome avec un dépôt d'une couche d'or ou d'un alliage à base d'or ayant par exemple déjà été réalisée. Ces revêtements ont en particulier pour but de conférer au volume de cristal la teinte du métal précieux qui lui est combiné, afin d'accentuer sa connotation bijou et de mieux le marquer comme article de bijouterie de luxe.

Par exemple, le document US2004/0053068 décrit un panneau de verre présentant une réflexion métallique obtenue par une couche de base diélectrique, recouverte d'une couche métallique à base de chrome ayant une réflexion élevée et une couche finale à base d'un nitrure diélectrique.

Pour ce qui concerne en particulier les gemmes ou les objets décoratifs ayant un substrat transparent ou translucide, US2004/0083759 décrit un revêtement permettant de modifier leur apparence, leur couleur par l'emploi d'un revêtement métallique qui absorbe le rayonnement lumineux, mais ne présentant pas d'effet dichroïque.

Le document US6292302 décrit, quant à lui, un miroir, par exemple pour rétroviseurs, ayant un effet dichroïque comprenant une couche d'un oxyde de métal, une couche d'un métal oxydable ou d'un metalloïde ayant un indice de réfraction différent de la première couche et d'une couche finale barrière à l'oxygène, à base d'un nitrure ou d'un carbure d'un métal.

L'objet de la présente invention est de proposer des effets visuels plus étendus, de nature dichroïque, offrant à l'observateur une palette de couleurs bien plus étendue que précédemment.

A cet effet, une partie de la surface externe du volume du cristal est revêtue d'une succession de couches qui obéit au schéma suivant, selon l'invention :
- au moins une alternance de deux couches transparentes métalliques ou céramiques au contact du cristal la ou les alternances de couches se composant chacune d'un couple formé d'une couche de SiO₂ et d'une couche de TiO₂ ou bien d'un couple formé d'une couche de MgF₂ et d'une couche de Cr ; puis
- une couche finale opaque réfléchissante constituée d'un métal.

Classiquement, afin que le phénomène de dichroïsme puisse mieux se manifester, il convient en effet qu'une couche opaque finale empêche d'une part la transmission des rayons lumineux, et permette d'autre part la réflexion du rayonnement. Le dichroïsme proprement dit est obtenu par la combinaison du volume de cristal au travers duquel se fait l'observation, qui a une incidence notamment sur la direction des rayons lumineux incidents et réfléchis selon leur longueur d'onde, et des couches transparentes métalliques et/ou céramiques, qui absorbent/réfléchissent de manière différente les différentes longueurs d'ondes de la lumière visible.

De préférence, selon l'invention, le métal constituant la couche finale opaque peut être du titane (Ti) ou, alternativement, il peut également s'agir de chrome (Cr).

Ces métaux sont notamment intéressants pour leurs propriétés physicochimiques, et en particulier leur grande dureté, leur aptitude à résister à l'abrasion et aux produits chimiques.

De préférence encore, la succession des couches appliquées sur la portion de surface externe d'un cristal comporte seulement une ou deux alternances desdites deux couches métalliques ou céramiques.

Dans le passé, un nombre bien supérieur d'alternances de couches a déjà été utilisé, par exemple pour la réalisation d'effets d'irisation. En l'espèce, l'expérience a montré que l'existence d'une unique alternance de deux couches, voire de deux alternances (4 couches) confère les meilleurs effets visuels. ladite ou lesdites alternances de couches se compose(nt) chacune d'un couple formé d'une couche de SiO₂ et d'une couche de TiO₂. Tout autre matériau présentant des propriétés physico-chimiques similaires pourrait cependant être employé.

Dans l'hypothèse de l'utilisation combinée de SiO₂ et de TiO₂, chaque alternance est donc réalisée par des céramiques, dont les propriétés mécaniques (dureté, haute résistance) et la faible réactivité chimique sont bien connues.

Alternativement, chaque alternance peut également se composer d'un couple formé d'une couche de MgF₂ et d'une couche de Cr. La différence entre les couples de matériaux utilisés dans les deux hypothèses réside notamment dans les couleurs que l'on peut visualiser à travers le cristal.

La sélection des matériaux s'opère en fait à partir notamment de leurs propriétés optiques, en particulier de leur indice de réfraction, en vue de l'obtention de résultats optiques spécifiques qui leur correspondent.

Pour assurer à titre principal les effets visuels espérés, mais également pour satisfaire à des exigences colorimétriques, le choix de l'épaisseur des différentes couches est également important.

Ainsi, la couche finale opaque, selon l'invention, présente une épaisseur supérieure ou égale à 50 nm.

De même, de préférence, l'épaisseur de la première couche de chaque alternance est comprise entre 50 et 500 nm. Enfin, l'épaisseur de la seconde couche de chaque alternance est comprise entre 90 et 400 nm.

Comme on l'a également précisé, l'invention concerne des bijoux revêtus de ces différentes couches. Lesdits bijoux peuvent être du type bague, boucle d'oreille, pendentif, broche, etc.. et comporter un volume de cristal ou de matériau amorphe transparent tels qu'ils ont été définis auparavant.

Plus précisément, ce volume peut prendre différentes géométries, et prendre en particulier la forme d'un cabochon comportant une surface sur laquelle est appliquée la succession des couches définies auparavant.

Le revêtement métallique et/ou céramique sur le volume du cristal est obtenu par des techniques connues en soi, telle que l'évaporation sous vide, la pulvérisation cathodique ou encore la pulvérisation cathodique magnétron.

## Revendications

1. Bijou de type bague, boucle d'oreille, pendentif, broche, comportant un volume de matériau vitreux amorphe transparent du type cristal ou verre dont une partie de la surface externe est revêtue de couches successives métalliques ou céramiques destinées à lui conférer un effet visuel décoratif de nature dichroïque lorsque ladite partie est observée à travers le volume du matériau transparent,
**caractérisé en ce que** la succession des couches obéit au schéma suivant :
- au moins une alternance de deux couches transparentes métalliques et/ou céramiques au contact du cristal, la ou les alternances de couches se composant chacune d'un couple formé d'une couche de SiO₂ et d'une couche de TiO₂ ou bien d'un couple formé d'une couche de MgF₂ et d'une couche de Cr; puis
- une couche finale opaque réfléchissante constituée de métal.

2. Bijou selon la revendication précédente, dans lequel le métal constituant la couche finale opaque est du titane (Ti).

3. Bijou selon la revendication 1, dans lequel le métal constituant la couche finale opaque est du chrome (Cr).

4. Bijou selon l'une quelconque des revendications précédentes, dans lequel la succession des couches comporte une ou deux alternances des deux couches métalliques ou céramiques.

5. Bijou selon l'une quelconque des revendications précédentes, dans lequel la première couche opaque présente une épaisseur supérieure ou égale à 50 nm.

6. Bijou selon l'une quelconque des revendications précédentes, dans lequel l'épaisseur de la première couche de chaque alternance est comprise entre 50 et 500 nm.

7. Bijou selon l'une quelconque des revendications précédentes, dans lequel l'épaisseur de la seconde couche de chaque alternance est comprise entre 90 et 400 nm.

8. Bijou selon l'une quelconque des revendications précédentes, dans lequel le volume de cristal est un cabochon sur une surface de laquelle est appliquée la succession de couches.

## Patentansprüche

1. Schmuck vom Typ Ring, Ohrring, Anhänger, Brosche, aufweisend ein Volumen transparenten amorphen glasartigen Materials vom Typ Kristall oder Glas, von dem ein Teil der Außenfläche mit aufeinanderfolgenden Metall- oder Keramikschichten beschichtet ist, die dazu bestimmt sind, ihm eine dekorative visuelle Wirkung dichroitischer Art zu verleihen, wenn der Teil durch das Volumen des transparenten Materials betrachtet wird,
**dadurch gekennzeichnet, dass** die Aufeinanderfolge der Schichten dem folgenden Schema folgt:
- mindestens eine Wechselfolge von zwei metallischen und/oder keramischen transparenten Schichten im Kontakt mit dem Kristall, wobei sich die Wechselfolge(n) von Schichten jeweils aus einem Paar zusammensetzen, das von einer Schicht SiO₂ und von einer Schicht TiO₂ gebildet ist oder von einem Paar, das von einer Schicht MgF₂ und von einer Schicht Cr gebildet ist, dann
- eine abschließende reflektierende opake Schicht, die von Metall gebildet ist.

2. Schmuck nach vorangehendem Anspruche, wobei das Metall, das die abschließende opake Schicht bildet, Titan (Ti) ist.

3. Schmuck nach Anspruch 1, wobei das Metall, das die abschließende opake Schicht bildet, Chrom (Cr) ist.

4. Schmuck nach einem der vorangehenden Ansprüche, wobei die Aufeinanderfolge der Schichten eine oder zwei Wechselfolgen der zwei metallischen oder keramischen Schichten aufweist.

5. Schmuck nach einem der vorangehenden Ansprüche, wobei die erste opake Schicht eine Dicke von über oder gleich 50 nm aufweist.

6. Schmuck nach einem der vorangehenden Ansprüche, wobei die Dicke der ersten Schicht jeder Wechselfolge zwischen 50 und 500 nm inklusive beträgt.

7. Schmuck nach einem der vorangehenden Ansprüche, wobei die Dicke der zweiten Schicht jeder Wechselfolge zwischen 90 und 400 nm inklusive beträgt.

8. Schmuck nach einem der vorangehenden Ansprüche, wobei das Kristallvolumen ein Cabochon auf einer Fläche ist, auf der die Aufeinanderfolge von Schichten aufgetragen ist.

## Claims

1. A jewel of the ring, earring, pending, broach type, including a volume of transparent amorphous vitreous material of the crystal or glass type whereof part of the outer surface is coated with successive metal or ceramic layers intended to give it a dichroic and decorative effect when the part is observed through the volume of the transparent material,
**characterized in that** the series of layers obeys the following scheme:
- at least one alternation of two metal and/or ceramic transparent layers in contact with the crystal, the alternation(s) of layers each being made up of a pair formed by a layer of SiO₂ and a layer of TiO₂ or a pair formed by a layer of MgF₂ and a layer of Cr; then
- a final reflective opaque layer made from metal.

2. The jewel according to the preceding claim, wherein the metal making up the final opaque layer is titanium (Ti).

3. The jewel according to claim 1, wherein the metal making up the final opaque layer is chromium (Cr).

4. The jewel according to any one of the preceding claims, wherein the series of layers includes one or two alternations of two metal or ceramic layers.

5. The jewel according to any one of the preceding claims, wherein the first opaque layer has a thickness greater than or equal to 50 nm.

6. The jewel according to any one of the preceding claims, wherein the thickness of the first layer of each alternation is comprised between 50 and 500 nm.

7. The jewel according to any one of the preceding claims, wherein the thickness of the second layer of each alternation is comprised between 90 and 400 nm.

8. The jewel according to any one of the preceding claims, wherein the volume of crystal is a cabochon on a surface of which the series of layers is applied.
